# EUROPÄISCHE PATENTSCHRIFT

(11) **EP 1 591 310 B1**
(45) Veröffentlichungstag und Bekanntmachung des Hinweises auf die Patenterteilung: **23.07.2008**
(21) Anmeldenummer: 05009158.6
(22) Anmeldetag: 26.04.2005
(51) Int. Cl.: B60P 1/28

(54) **Kippeinrichtung für ein Fahrzeug**
Tipping body construction for a vehicle
Structure basculante pour un véhicule

(30) Priorität: 29.04.2004 DE 202004006895 U
(43) Veröffentlichungstag der Anmeldung: 02.11.2005
(73) Patentinhaber: Alber, Edwin, 88605 Messkirch-Buffenhofen (DE)
(72) Erfinder: Alber, Edwin, 88605 Messkirch-Buffenhofen (DE)
(74) Vertreter: Riebling, Peter

(56) Entgegenhaltungen:
- DE-A1- 3 010 852
- DE-A1- 19 959 799
- US-A- 5 836 657

## Beschreibung

Die Erfindung betrifft eine Kippeinrichtung für ein Fahrzeug nach dem Oberbegriff des Patentanspruchs 1.

Insbesondere betrifft die Erfindung ein Zweiachs-Universalnutzfahrzeug für seinen Einsatzzweck insbesondere als Kommunalfahrzeug. Bei Kommunalfahrzeugen ist es bekannt, sehr kurz bauende, allradgetriebene Zweiachs-Fahrzeuge zu verwenden, die lediglich eine Fahrerkabine und einen kurzen Rahmen aufweisen. Die Hinterachse dieses Zweiachs-Fahrzeuges ist allerdings nur mit einer nicht höhenverstellbaren Schraubenfeder oder Blattfeder abgefedert.

Bei derartigen Fahrzeugen besteht deshalb der Nachteil, dass es schwierig ist, unterschiedliche Aufbauten auswechselbar anzuordnen. Die herstellerseitig angeordnete Pritsche bleibt stets auf dem Fahrzeugrahmen befestigt, auch wenn beispielsweise ein Salzstreuer aufgesetzt wird. Damit besteht der Nachteil, dass die Ladepritsche unnötigerweise das Gesamtgewicht des Fahrzeuges vergrößert bzw. die Nutzlast verringert.

Der Austausch von unterschiedlichen Aufbauten, die auf der Ladepritsche befestigt werden, ist schwierig. Für jeden auswechselbaren Aufbau, z. B. einen Salzstreuer, müssen an dem auszuwechselnden Aufbau entsprechenden Kurbelstützen befestigt werden, die dann herabgeschwenkt und auf den Boden aufgesetzt werden und in einer derartige Höhelage geschraubt werden, dass das Fahrzeug rückwärts unter den angehobenen Aufbau fahren kann, um diesen aufzuladen. Es werden dann die Kurbelstützen wieder verkürzt, um den Aufbau (z. B. den Salzstreuer) auf der Ladepritsche abzusetzen.

Die fehlende Auswechselbarkeit der Ladepritsche führt im Übrigen zu einem unerwünscht hohen Schwerpunkt des Fahrzeuges und damit zu einer Vergrößerung der Kippgefahr.

Aufgrund der Notwendigkeit, dass stets eine Ladepritsche mitgeführt werden muss, erhöhen sich auch entsprechend die Anschaffungskosten für dieses Fahrzeug, obwohl in vielen Fällen eine derartige Ladefläche nicht erforderlich oder gewünscht ist.

Im Übrigen besteht der Nachteil, dass wegen des bestehenden, festen Pritschenaufbaus eine sehr hohe Ladehöhe in Kauf genommen werden muss, was dazu führt, dass die manuelle Beschickung der Ladepritsche mit einem entsprechenden Wechselaufbau relativ schwierig von statten geht.

Die auf den gleichen Anmelder zurückgehende DE 202 15 363 U1 offenbart ein allradgetriebenes Fahrzeug, welches zur Aufnahme von auswechselbaren Aufbauten wie z.B. einer Pritsche, eines Kippers, eines Abrollkippers oder eines Ladekrans und dergleichen geeignet ist, mit einer Vorderachse, einer Hinterachse, einem Fahrerhaus und einem Rahmen, wobei die Hinterachse über eine höhenregulierbare Luftfederung gegenüber dem Rahmen abgestützt ist. Hierdurch können derartige Wechselaufbauten einfach und ohne manuelle Handarbeit auf den insbesondere als Leiterrahmen ausgebildeten Rahmen aufgesetzt und auch wieder abgesetzt werden, da die Ladehöhe mittels der Luftfederung der Hinterachse einstellbar ist. Gravierender Nachteil ist aber die aufwändige und kostenintensive Konstruktion der Luftfederung der Hinterachse.

Die DE 30 10 852 A1 offenbart einen Sattelschlepper mit allen Merkmalen des Oberbegriffs des Patentanspruches 1. Eine Höhenverstellbarkeit des Auflagers der Hubeinrichtung mitsamt der Hubeinrichtung relativ zum Festrahmen ist jedoch nicht vorgesehen.

Die DE 199 59 799 A1 offenbart ein Nutzfahrzeug mit einem Kipper-Aufbau, der mittels teleskopierbarer Kolben-Zylinder-Vorrichtung verkippbar ist, deren Zylinder über eine Dämpfungseinrichtung am Fahrzeug gelagert ist. Die beim Beladen des Fahrzeugs auftretenden Stoßkräfte werden von der Dämpfungseinrichtung aufgefangen, wobei der Zylinder entlang des Kolbens verschoben wird und damit in seiner Position in Richtung der Fahrzeughöhe verändert wird. Das Auflager der Dämpfungseinrichtung verbleibt auf dem Fahrzeug unverändert in seiner Höhenposition, so dass hiermit kein zusätzlicher Freiraum unterhalb des Auflagers der Dämpfungseinrichtung auf dem Fahrzeug geschaffen werden kann.

Der Erfindung liegt deshalb die Aufgabe zugrunde, eine Kippeinrichtung für ein Fahrzeug ausgehend von der DE 202 15 363 U1 oder der DE 30 10 852 A1 so weiter zu bilden, dass diese wesentlich kostengünstiger in Herstellung und Betrieb ist und bei mindestens gleich einfachem und schnellem Auf- und Abbau der Kippeinrichtung auf den Rahmen des Fahrzeugs, die Kippeinrichtung auch für kostengünstige herkömmliche Fahrzeuge mit nicht höhenverstellbarem Fahrzeugrahmen insbesondere mittels der Federung der Hinterachse geeignet ist.

Zur Lösung der gestellten Aufgabe ist die Kippeinrichtung für ein Fahrzeug nach der Erfindung durch die Merkmale des Patentanspruches 1 gekennzeichnet, wobei das Auflager der Hubeinrichtung auf dem Festrahmen mitsamt der Hubeinrichtung relativ zum Festrahmen höhenverstellbar ausgebildet ist.

Mit der technischen Lehre nach der Erfindung ergibt sich der wesentliche Vorteil, dass nun der Fahrzeugrahmen selbst nicht mehr über eine bestimmte Hubhöhe in vertikaler Richtung anhebbar und absenkbar ausgebildet sein muss, sondern erfindungsgemäß ist nun der Hubzylinder zum Festrahmen der Kippeinrichtung höhenverstellbar anhebbar und absenkbar ausgebildet. Hierdurch können auch herkömmliche und kostengünstigere Fahrzeuge mit der erfindungsgemäßen Kippeinrichtung ausgerüstet werden, wobei die Umrüstzeit und der Handhabungskomfort mindestens vergleichbar gut sind.

Weitere Ausgestaltungen der Erfindung sind Gegenstand der Unteransprüche.

Ein Vorteil ergibt sich durch den höheneinstellbaren Hubzylinder dadurch, dass man nun derartige Kippeinrichtungen sehr einfach und ohne wesentliche manuelle Handarbeit oder gar vollkommen ohne Handarbeit auf den Fahrzeugrahmen aufsetzen und auch von dort wieder absetzen kann.

Beim Aufladen der Kippeinrichtung auf das Fahrzeug wird das erfindungsgemäße Zweiachs-Fahrzeug nun bei hochgelegtem gesamtem Hubzylinder der Kippeinrichtung unter die Kippeinrichtung gefahren, bis diese lagenrichtig über dem Fahrzeugrahmen positioniert ist. Es werden dann z.B. vier Steckstützen formschlüssig an dem Festrahmen der Kippeinrichtung angebracht und lediglich über eine geringe Verstellhöhe (ca. 0-10 cm) zusammengefahren (mittels Kurbel und Spindel), wodurch der Festrahmen der Kippeinrichtung sich nach unten hin auf den Fahrzeugrahmen legt und dort fixiert werden kann. Nach dem Aufsetzen der Kippeinrichtung werden die Steckstützen vom Wechselaufbau wieder abgenommen.

Beim Abladen der Kippeinrichtung vom Fahrzeug wird der gesamte Hubzylinder wieder hochgelegt und dann werden die Steckstützen am Festrahmen der Kippeinrichtung angebracht und um die geringe Verstellhöhe (0-10 cm) auseinandergefahren (mittels Kurbel und Spindel), so dass die Steckstützen am Boden aufliegen und der Festrahmen der Kippeinrichtung sich genügend vom Fahrzeugrahmen abhebt. Anschließend kann das Fahrzeug unter der angehobenen Kippeinrichtung herausfahren und der Hubzylinder kann wieder eingeklappt werden.

In einer anderen Ausgestaltung kann es vorgesehen sein, dass ein derartiger Wechselaufbau auf einem starren Lagergestell gelagert ist, wobei das Auf- und Abladen der Kippeinrichtung analog zum Auf- und Abladen mit den Steckstützen durchgeführt wird.

Daraus ergibt sicht der Vorteil, dass durch die Kippeinrichtung eine geringe Verstellhöhe der Steckstützen bzw. des starren Lagergestells von 0-10 cm gegeben ist, nämlich 20-40 cm weniger als herkömmliche, vergleichbare Fahrzeuge, was einen enormen Zeitvorteil mit sich bringt. Ein spezielles Fahrzeug mit höhenverstellbarer Ladepritsche z.B. über die Hinterachsenfederung ist auch nicht nötig, was zu Kostenvorteilen in Anschaffung und Unterhalt führt.

Zur Höhenverstellung des Hubzylinders zum Festrahmen der Kippeinrichtung ist ein zweiarmiger Hebel (Wippe) auf dem Festrahmen der Kippeinrichtung schwenkbar gelagert, wobei der Hubzylinder auf einem der Hebelarme gelagert ist und der andere Hebelarm während des Absenkvorganges des Kipprahmens auf den Festrahmen der Kippeinrichtung mittelbar oder unmittelbar durch den Kipprahmen nach unten hin verschwenkbar ist, so dass der Hubzylinder nach oben hin verschwenkt wird.

Die Ausrichtung der Längsachse der Wippe ist dabei insbesondere in Fahrtrichtung des Fahrzeuges oder aber quer hierzu. Natürlich kann die Wippe aber jede beliebige Stellung zwischen diesen beiden bevorzugten Stellungen einnehmen, also quer zur Fahrtrichtung des Fahrzeuges liegen.

Insbesondere sind die Kipprichtung der Kippeinrichtung bzw. Kipperbrücke und die Schwenkrichtung der Wippe in gleicher Richtung vorgesehen.

Weiterhin ist bevorzugt, dass das Schwenklager der Wippe auf dem Festrahmen zwischen dem Kipplager der Kippeinrichtung bzw. Kipperbrücke und dem Schwenklager des Hubzylinders in der Wippe liegt. Hierdurch werden besonders günstige Hebelverhältnisse gewährleistet, so dass die Gewichtskraft der unbeladenen Kipperbrücke ausreicht, um den Hubzylinder in der Höhe zu verstellen. Das Hebelverhältnis der beiden Hebelarme der Wippe liegt bei ca. 1:2 (Untersetzung der Gewichtskraft der Kipperbrücke), je nach Gewicht des Hubzylinders. Das Ende des freien Hebelarmes der Wippe, der dem Hebelarm mit dem Hubzylinder gegenüberliegt, liegt etwa in der Mitte zwischen Kipplager der Kippeinrichtung bzw. Kipperbrücke und dem Hubzylinder bzw. dessen Lager im Kipprahmen.

In einer anderen Ausgestaltung der Erfindung kann anstatt des Antriebs der Wippe über Gewichtskraft der Kipperbrücke auch ein hydraulischer, pneumatischer oder elektrischer Antrieb vorgesehen sein, oder Kombinationen davon. Bevorzugt wird aber wegen der kostengünstigen Konstruktion und einfachen Handhabung, ein gewichtsabhängiger Antrieb der Wippe mittels der Kipperbrücke.

Am freien Ende des Hebels der Wippe ist bevorzugt eine Klappstütze angeordnet, die die zeitweise Verbindung zwischen Wippe und Kipperbrücke herstellt, wenn der Hubzylinder angehoben werden soll, um ein Auf- oder Abladen der Kippeinrichtung zu ermöglichen. Die Betätigung der Klappstütze ist bevorzugt manuell, ggf. über Seilzug, kann aber auch motorisch, ggf. auch über Seilzug geschehen. Die Klappstütze wird nach Ausfahren des Hubzylinders bis zu einem vordefinierten Öffnungswinkel der Kipperbrücke aus dem freien Hebelarm nach oben hin ausgeklappt und legt sich beim Einfahren des Hubzylinders an ein Widerlager des Festrahmens an, so dass bei weiterem Ablassen des Hubzylinders nach unten dann die Wippe verschwenkt und der Hubzylinder in Richtung Festrahmen eingeschwenkt wird.

Eine derartige Klappstütze kann natürlich statt an der Wippe auch an der Unterseite des Kipprahmens angeordnet sein, die dann mit einem Auflager am freien Hebelarm der Wippe zusammenwirkt, so dass also auch die mechanische Umkehrung der Anordnung der Klappstütze und des zugeordneten Lagers im Rahmen der Erfindung möglich ist.

Die Höhenverstellbarkeit des Hubzylinders kann so weit gehen, dass die Unterkante des Hubzylinders vollkommen über der Unterkante des Festrahmens liegt, oder über der Unterkante des Auflagers des Hubzylinders im Festrahmen. Hierdurch wird erreicht, dass eine Höhenverstellung der Steckstützen für die Ablage der Kippeinrichtung nur mehr in geringem Ausmaß zwischen 0-10 cm nötig ist, im Gegensatz zum Stand der Technik, wo 30-40 cm Höhenverstellung der Steckstützen nötig waren. Damit können auch kostengünstige unverstellbare Steckstützen bei der erfindungsgemäßen Kippeinrichtung verwendet werden oder aber kostengünstige höhenverstellbare Steckstützen mit nur einer geringen Verstellbarkeit von 0-10 cm.

Im Folgenden wird die Erfindung anhand von lediglich einem beispielhaften Ausführungsweg darstellende Zeichnungen näher erläutert. Hierbei gehen aus den Zeichnungen und ihrer Beschreibung weitere Merkmale und Vorteile der Erfindung hervor.

Es zeigen:
- Figur 1:: Schematisierte Kippeinrichtung nach der Erfindung im fahrbereiten Zustand des Fahrzeugs;
- Figur 2:: Die Kippeinrichtung nach Figur 1 während des Ausfahrens des Hubzylinders bzw. während des Kippvorgangs der Kippbrücke;
- Figur 3:: Die Kippeinrichtung nach Figur 2 zu einem späteren Zeitpunkt des Ausfahrens des Hubzylinders mit weiter verkippter Kippbrücke;
- Figur 4:: Die Kippeinrichtung nach Figur 3 zu einem späteren Zeitpunkt des Ausfahrens des Hubzylinders mit noch weiter verkippter Kippbrücke und mit ausgeklappter Klappstütze;
- Figur 5:: Die Kippeinrichtung nach Figur 4 zu einem späteren Zeitpunkt während des wieder Einfahrens des Hubzylinders mit leicht angehobenem Auflager für den Hubzylinder aus dem Festrahmen;
- Figur 6:: Die Kippeinrichtung nach Figur 5 zu einem späteren Zeitpunkt während des weiteren Einfahrens des Hubzylinders mit weiter angehobenem Auflager für den Hubzylinder aus dem Festrahmen.

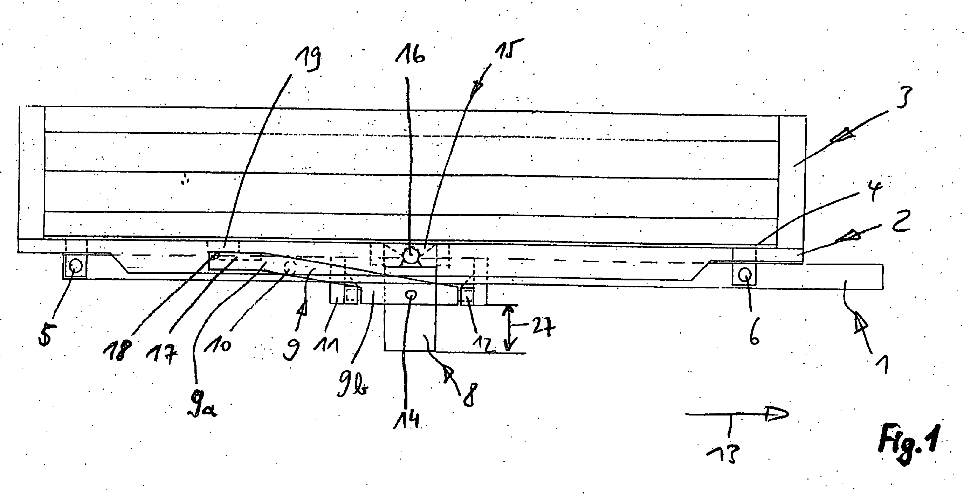

Die Figuren 1-6 zeigen die erfindungsgemäße Kippeinrichtung in verschiednen Kippzuständen, wobei der Festrahmen 1 der Kippeinrichtung auf einem nicht dargestellten Fahrzeugrahmen insbesondere für ein Zweiachs-Universalfahrzeug, insbesondere als Kommunalfahrzeug, aufgelegt und fixiert werden kann.

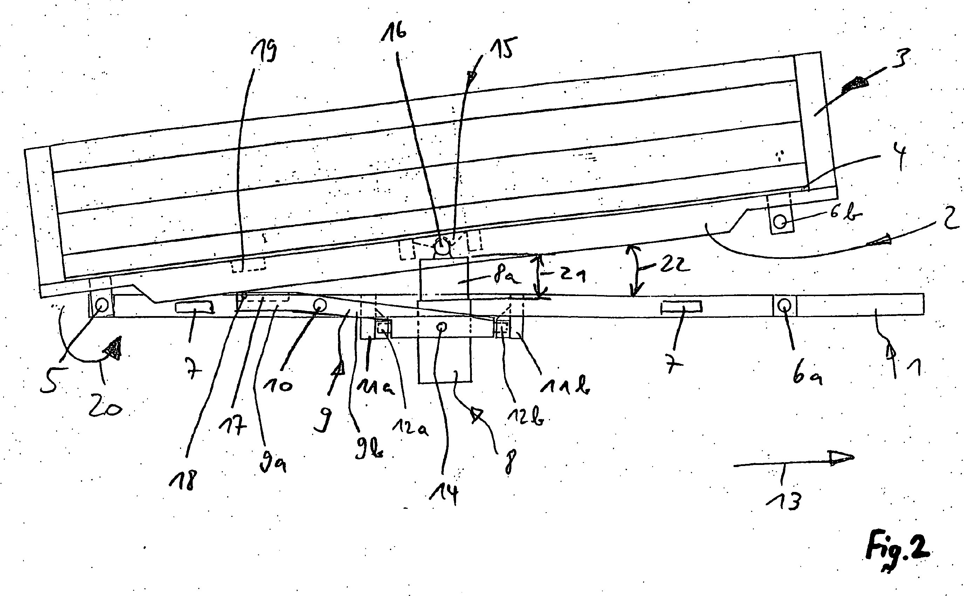

**Figur 1** zeigt den Ruhezustand der Kippeinrichtung, der herrscht, wenn das Fahrzeug mit der Kippeinrichtung in Fahrtrichtung 13 fährt, oder aber wenn die Kippeinrichtung über nicht näher dargestellte Steckstützen, die in Öffnungen 7 (siehe Figur 2) eingreifen, auf dem Erdboden ruht.

Auf dem Festrahmen 1 der Kippeinrichtung ist ein Kipprahmen 2 aufgelegt, der zum Festrahmen 1 über zwei Kipplager 5 (Kugel in Pfanne) am hinteren Ende (in Fahrtrichtung 13 gesehen) der Kippeinrichtung in Kipprichtung 20 mittels des Hubzylinders 8 kippbar ist. Am vorderen Ende (in Fahrtrichtung 13 gesehen) der Kippeinrichtung sind Fixierungen 6 mit Ösen 6a am Festrahmen 1 und Ösen 6b am Kipprahmen 2 vorgesehen, die den Kipprahmen 2 mitsamt der Kipperbrücke 3 und Bodenplatte 4 zum Festrahmen 1 während der Fahrt des Fahrzeugs oder während der Lagerung der Kippeinrichtung auf den Steckstützen fixieren.

Etwa mittig unterhalb der Kipperbrücke 3 befindet sich der Hubzylinder 8, der sich einerseits mit seinem Widerlager 16 an dem Widerlager 15 am Kipprahmen 2 abstützt, andererseits in einem Schwenklager 14 einer Wippe 9 liegt, die als doppelarmiger Hebel 9 mit zwei Hebelarmen 9a und 9b ausgebildet ist.

Die Wippe 9 selbst ist einerseits mit ihren Wippenzapfen 12 in einem Auflager 11 am Festrahmen 1 gelagert und andererseits über ein Schwenklager 10 am Festrahmen 1 schwenkbar gelagert. Das Auflager 11 a, 11 b für die Wippenzapfen 12a, 12b links und rechts des Hubzylinders 8 am rechten Hebelarm 9b der Wippe 9 ist dabei derart gestaltet, dass nach unten und seitlich Halt gegeben ist, jedoch eine Bewegung der Wippenzapfen 12 nach oben hin aus dem Auflager 11 heraus möglich ist. Diese Bewegung der Wippenzapfen 12 nach oben hin aus dem Auflager 11 wird im unverkippten Zustand nach Figur 1 und im verkippten Zustand mit ausgefahrenem Hubzylinder 8 nach den Figuren 2-4 nur durch das Eigengewicht des Hubzylinders 8 und der Aufbauten 2-4 vermieden.

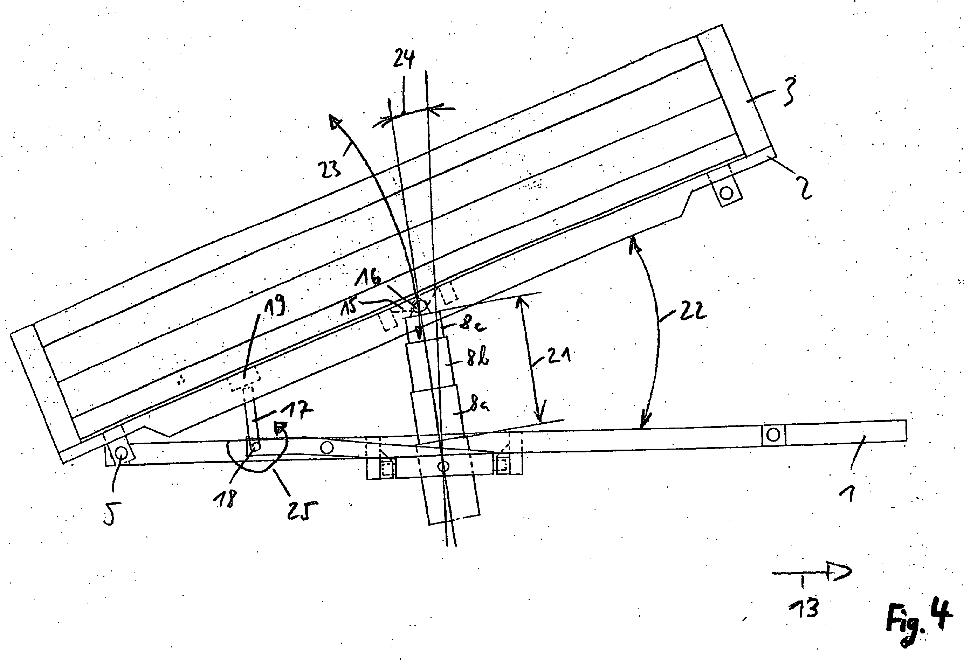

Innerhalb des freien linken Hebelarms 9a der Wippe 9 befindet sich eine über ein Schwenklager 18 schwenkbare Klappstütze 17, die noch näher in den Figuren 4-6 beschrieben wird und die sich an einem Auflager 19 am Festrahmen 1 abstützen kann, wenn sie ausgeschwenkt wird (siehe Figuren 4-6).

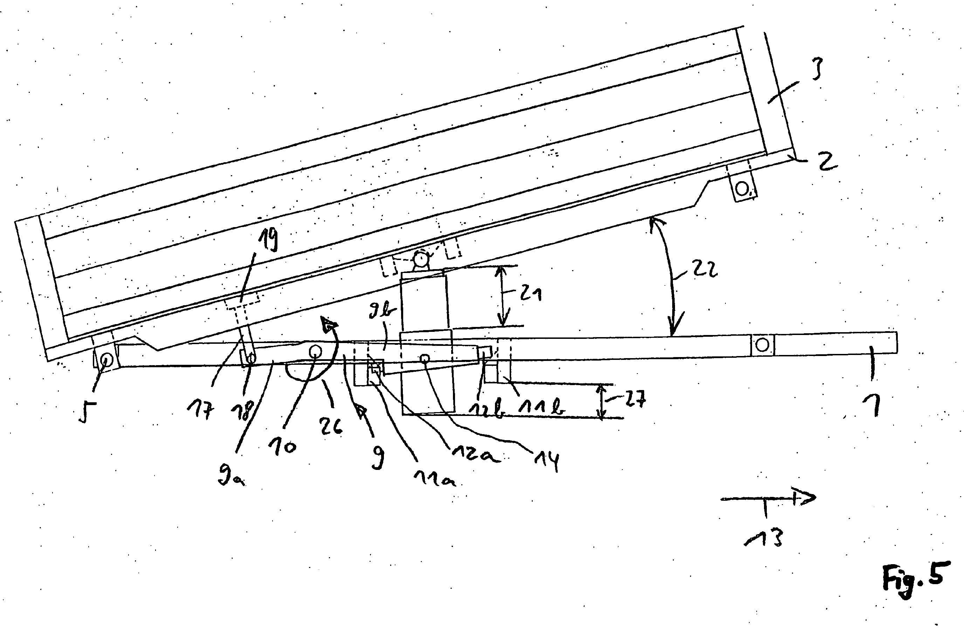

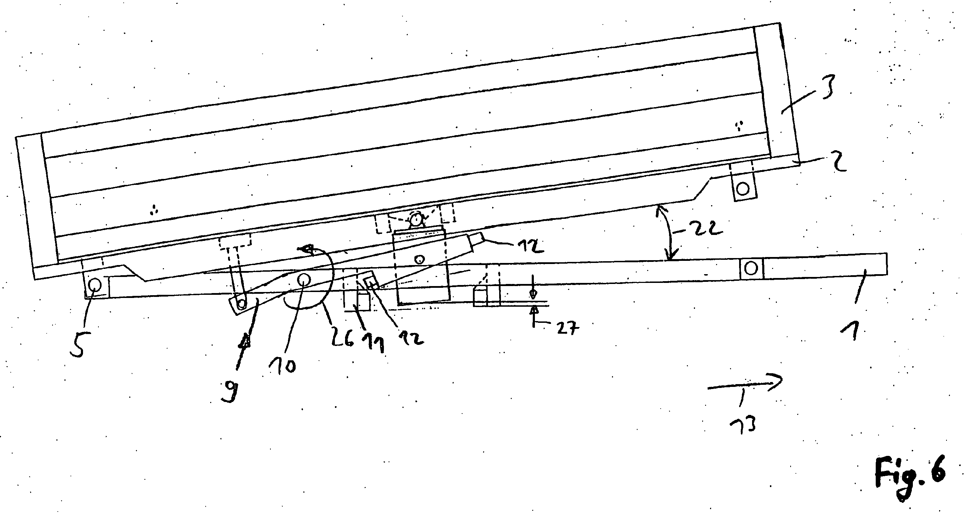

Mit Position 27 ist der Abstand dargestellt zwischen der Unterkante des Hubzylinders 8 und des Auflagers 11 am Festrahmen 2 für die Wippenzapfen 12, welcher Abstand 27 dem erfindungsgemäßen Gewinn an Verstellhöhe entspricht, der nicht mehr durch die Steckstützen (nicht dargestellt) erreicht werden muss. Auf diesen Abstand 27 wird in den Figuren 5 und 6 noch einmal Bezug genommen.

In **Figur 2** ist der Teleskopzylinder 8a des Hubzylinders 8 bereits um einen Hubweg 21 ausgefahren worden, so dass sich der Kipprahmen 2 um die Kippachse 5 in Richtung 20 verkippt und damit ein Öffnungswinkel 22 zwischen Festrahmen 1 und Kipprahmen 2 ergibt. Vor den Verkippen muss natürlich die Fixierung 6 zwischen Festrahmen 1 und Kipprahmen 2 gelöst werden.

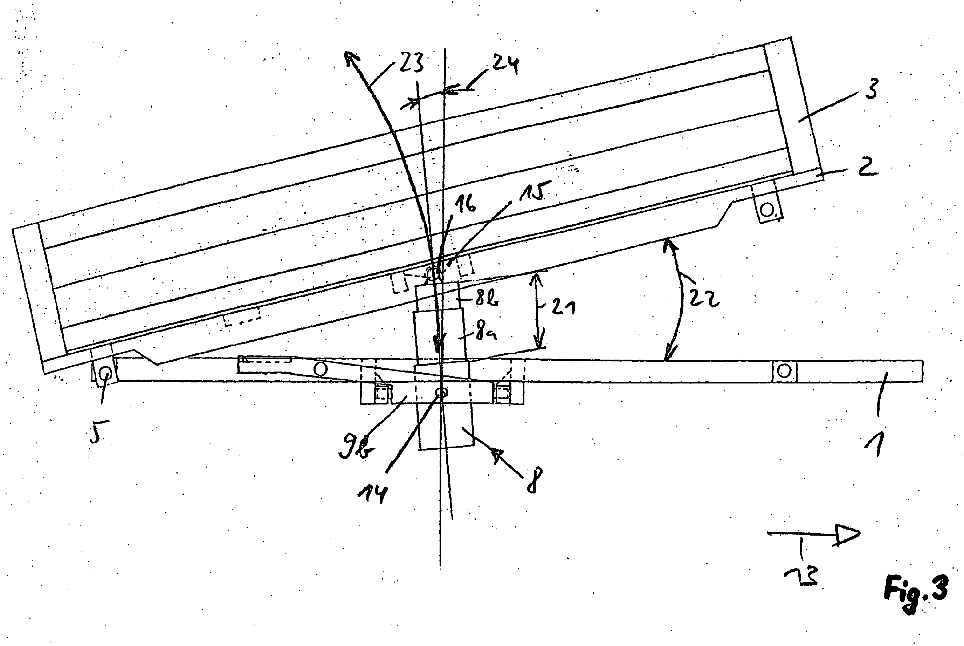

In **Figur 3** ist ein weiterer Teleskopzylinder 8b aus dem Teleskopzylinder 8a des Hubzylinders 8 ausgefahren worden, so dass sich der Kipprahmen 2 um die Kippachse 5 in Richtung 20 weiter verkippt und damit ein größerer Hubweg 21 und größerer Öffnungswinkel 22 zwischen Festrahmen 1 und Kipprahmen 2 ergibt. Hier ist erkennbar, dass sich der gesamte Hubzylinder 8 dabei um die Schwenkachse 14 im rechten Hebelarm 9b der Wippe 9 um einen Schwenkwinkel 24 leicht nach links verschwenkt hat. Die verbundenen Lager 15, 16 zwischen Hubzylinder 8 und Kipprahmen 2 laufen dabei beim Ausfahren des Hubzylinders 8 nach oben kreisförmig auf einem Kippbogen 23 um das Kipplager 5 (Figuren 3, 4).

In **Figur 4** ist durch das weitere Ausfahren des Teleskopzylinders 8c des Hubzylinders 8 nach oben der für das Ab- und Aufladen der Kippeinrichtung erforderliche Hubweg 21 erreicht, so dass nun die Klappstütze 17 in Schwenkrichtung 25 um das Schwenklager 18 nach oben ausgeklappt werden kann, bis das freie Ende der Klappstütze 17 in Gegenüberstellung zum zugehörigen Widerlager 19 auf dem Kipprahmen 3 liegt. Wichtig dabei ist, dass die Klappstütze 17 etwas über die Vertikale hinaus in Schwenkrichtung 25 verschwenkt wurde und dort an einem Anschlag an der Wippe 9 anliegt, so dass die Klappstütze 17 bei Belastung durch die Kipperbrücke 3 (Figuren 5, 6) nicht wieder in ihre Ausgangslage nach Figur 1-3 zurückklappt. Nun kann der Hubzylinder 8 wieder nach unten eingefahren werden, so dass sich die Situation nach Figur 5 ergibt.

In **Figur 5** ist der Hubzylinder 8 wieder ein Stück nach unten eingefahren und die Klappstütze 17 ist dadurch in Anlage mit seinem Widerlager 19 und die Gewichtskraft des Aufbaus 2-4 wirkt dann über die Klappstütze 17 auf den linken Wippenarm 9a. Der Wippenarm 9a wird dadurch nach unten gedrückt und die gesamte Wippe 9 schwenkt in Schwenkrichtung 26 um das Schwenklager 10 herum, so dass sich der rechte Wippenarm 9b nach oben bewegt. Dies ist wegen dem (nur) nach oben offenen Auflager 11 der Wippenzapfen 12 möglich. Der rechte Wippenzapfen 12b ist bereits weiter aus dem Auflager 11 b herausgeschwenkt im Vergleich zum linken Wippenzapfen 12a, der noch teilweise in seinem Auflager 11a steckt. Der Abstand 27 zwischen der Unterkante des Hubzylinders 8 und des Auflagers 11 am Festrahmen 2 für die Wippenzapfen 12 hat sich im Vergleich zur Figur 1 verringert.

Schließlich ist in **Figur 6** dann die Wippe 9 unter der Gewichtskraft des Aufbaus 2-4 (und ggf. der Beladung) weiter in Schwenkrichtung 26 um das Schwenklager 10 verschwenkt, soweit, dass der Abstand 27 zwischen der Unterkante des Hubzylinders 8 und des Auflagers 11 am Festrahmen 2 für die Wippenzapfen 12 nun nahezu Null ist oder sich gar der gesamte Hubzylinder 8 weiter oberhalb der Unterkante des Auflagers 11 befindet. Jetzt ist der Hubzylinder 8 völlig in Schwenkrichtung 10 verschwenkt, so dass der eigentliche Ablade- oder Aufladevorgang der Kippeinrichtung auf das Fahrzeug beginnen kann.

Figur 6 stellt also den Zustand der Kippeinrichtung dar, in dem Fahrzeugrahmen und Kipprahmen der Kippeinrichtung verbunden bzw. getrennt werden können und das Fahrzeug unter die Kippeinrichtung bzw. aus dieser heraus fahren kann, bei am Festrahmen der Kippeinrichtung angebrachten Steckstützen, die, falls nötig in der Verstellhöhe (0-10 cm) angepasst werden können.

Das Herunterschwenken des Hubzylinders 8 in Gegenrichtung zur Schwenkrichtung 10 erfolgt analog umgekehrt zum Hinaufschwenken in Schwenkrichtung 10 gemäß den Figuren 1-6, so dass also die Schritte umgekehrt durchgeführt werden, beginnend mit Figur 6, dann Figur 5, dann Figur 4, Figur 3, Figur 2 und Schließlich Figur 1.

Natürlich kann nach Durchlaufen der Verkipp-Zustände der Figuren 6, 5 und 4, oder aber der Figuren 1, 2, 3 und 4 bereits aus dem Verkipp-Zustand der Figur 4 dann ein weiteres Verkippen mit größer werdendem Öffnungswinkel 22 der Kippeinrichtung erfolgen, anstatt die Verkipp-Zustände der Figuren 3, 2, und 1 bzw. 5 und 6 abzuarbeiten, mit eingeklappter oder ausgeklappter Klappstütze 17.

Die Figuren 2 und 3 stellen im Übrigen den bestimmungsgemäßen Kippvorgang dar, um auf der Kipperbrücke 3 befindliche Fracht abzuschütten. Eine Verkippung über den Kippwinkel 22 der Figur 4 hinaus ist natürlich möglich, da der Hubzylinder 8 einen weiteren Hubweg 21 als dort in Figur 4 dargestellt verfahren kann. Während des bestimmungsgemäßen Kippvorgangs wird natürlich die Klappstütze 17 nicht ausgeklappt, die ausschließlich für den Ab- und Aufladevorgang der Kippeinrichtung auf das Fahrzeug bzw. dessen Rahmen vorgesehen ist.

### Zeichnungslegende

- 1.: Festrahmen
- 2.: Kipprahmen
- 3.: Kipperbrücke
- 4.: Bodenplatte
- 5.: Kipplager
- 6.: Fixierung; 6a Öse an 1; 6b Öse an 2
- 7.: Öffnungen für Standfüße in 1
- 8.: Hubzylinder; 8a, 8b Teleskopzylinder
- 9.: doppelarmiger Hebel (Wippe); 9a Wippenarm links; 9b Wippenarm rechts
- 10.: Schwenklager von Wippe in Festrahmen
- 11.: Auflager in 1 für Wippenzapfen; 11a links; 11b rechts
- 12.: Wippenzapfen; 12a links; 12b rechts
- 13.: Fahrtrichtung
- 14.: Schwenklager von Hubzylinder in Wippe
- 15.: Widerlager Hubzylinder in Kipprahmen
- 16.: Widerlager Hubzylinder
- 17.: Klappstütze
- 18.: Schwenklager Klappstütze an Wippe
- 19.: Widerlager an 2
- 20.: Kipprichtung
- 21.: Hubweg von 8
- 22.: Öffnungswinkel von 2, 3
- 23.: Kippbogen von 15, 16
- 24.: Kippwinkel von 8
- 25.: Schwenkrichtung von 17 um 18
- 26.: Schwenkrichtung von 9 um 10
- 27.: Abstand zwischen Unterkante 8 und Unterkante 11 1

## Patentansprüche

1. Kippeinrichtung für ein Fahrzeug, insbesondere für ein zweiachsiges Universalnutzfahrzeug für Kommunalzwecke, wobei ein Festrahmen (1) der Kippeinrichtung auswechselbar an einem Fahrzeugrahmen befestigbar ist und auf dem Festrahmen (1) ein Kipprahmen (2) insbesondere mit Kipperbrücke (3) und Bodenplatte (4) aufgesetzt ist, der mittels einer über ein Auflager (12) auf dem Festrahmen (1) angeordneten Hubeinrichtung (8) um ein den Festrahmen (1) und Kipprahmen (2) verbindendes Kipplager (5) verschwenkbar ist, **dadurch gekennzeichnet, dass** das Auflager (12) der Hubeinrichtung (8) auf dem Festrahmen (1) mitsamt der Hubeinrichtung (8) relativ zum Festrahmen (1) **dadurch** höhenverstellbar ausgebildet ist, dass ein zweiarmiger Hebel bzw. eine Wippe (9) in einem Schwenklager (10) auf dem Festrahmen (1) schwenkbar gelagert ist und die Hubeinrichtung (8) über ein Schwenklager (14) auf einem der Hebelarme (9b, 9a) schwenkbar gelagert ist und der andere freie Hebelarm (9a, 9b) bei hochgekipptem Kipprahmen (2) nach unten hin verschwenkbar ist, so dass die gesamte Hubeinrichtung (8) nach oben hin verschwenkt wird.

2. Kippeinrichtung nach Anspruch 1, **dadurch gekennzeichnet, dass** die Hubeinrichtung (8) ein pneumatischer und/oder hydraulischer und/oder elektrischer Hubzylinder (8) mit mindestens einem teleskopierbaren Teleskopzylinder (8a, 8b, 8c) ist.

3. Kippeinrichtung nach Anspruch 1 oder 2, **dadurch gekennzeichnet, dass** die Unterkante der Hubeinrichtung (8) vertikal bis zur Unterkante des Festrahmens (1) nach oben hin höhenverstellbar ist, oder darüber hinaus.

4. Kippeinrichtung nach Anspruch 3, **dadurch gekennzeichnet, dass** der vertikale Abstand (27) zwischen der Unterkante der Hubeinrichtung (8) und der Unterkante des Festrahmens (1) durch die Hubeinrichtung (8) auf einen Wert gebracht werden kann, der zum Auf- bzw. Abladen der Kippeinrichtung auf bzw. von einem Fahrzeug eine Restverstellhöhe der Kippeinrichtung mittels an die Kippeinrichtung anbringbarer und abnehmbarer externer Steckstützen von nur etwa 0-10 cm erfordert.

5. Kippeinrichtung nach einem der Ansprüche 1 bis 4, **dadurch gekennzeichnet, dass** das Hebelverhältnis der beiden Hebelarme (9a, 9b) der Wippe (9) bei ca. 1:2 Untersetzung der Gewichtskraft des Aufbaus , der den Kipprahmen (2), die Kipperbrücke (3) und die Bodenplatte (4) umfasst, liegt.

6. Kippeinrichtung nach einem der Ansprüche 1 bis 5, **dadurch gekennzeichnet, dass** der freie Hebelarm (9a, 9b) während des Absenkvorganges des Kipprahmens (2) auf den Festrahmen (1) unmittelbar oder mittelbar durch den Aufbau, der den Kipprahmen (2), die Kipperbrücke (3) und die Bodenplatte (4) umfasst, nach unten hin verschwenkbar ist, so dass die gesamte Hubeinrichtung (8) auf dem anderen Hebelarm (9b, 9a) nach oben hin verschwenkt wird.

7. Kippeinrichtung nach Anspruch 6, **dadurch gekennzeichnet, dass** während des Absenkvorganges des Kipprahmens (2) auf den Festrahmen (1) dazwischen eine Klappstütze (17) wirkt, die zuvor in Stellung geklappt wurde.

8. Kippeinrichtung nach Anspruch 7, **dadurch gekennzeichnet, dass** die Klappstütze (17) am freien Hebelarm (9a, 9b) der Wippe (9) oder an der Unterseite des Kipprahmens (2) angeordnet ist.

9. Kippeinrichtung nach Anspruch 7 oder 8, **dadurch gekennzeichnet, dass** die Betätigung der Klappstütze (17) manuell oder motorisch angetrieben geschieht, insbesondere über Seilzug.

10. Kippeinrichtung nach einem der Ansprüche 1 bis 5, **dadurch gekennzeichnet, dass** der freie Hebelarm (9b, 9a) mittels einer pneumatischen und/oder hydraulischen und/oder elektrischen Senkvorrichtung nach unten hin verschwenkbar ist, so dass der Hubzylinder (8) nach oben hin verschwenkt wird.

11. Kippeinrichtung nach Anspruch 1 bis 10, **dadurch gekennzeichnet, dass** die Ausrichtung der Längsachse der Wippe (9) oder deren Schwenklager (10) parallel in Fahrtrichtung (13) des Fahrzeuges oder aber quer hierzu ist.

12. Kippeinrichtung nach Anspruch 1 bis 11, **dadurch gekennzeichnet, dass** die Kipprichtung (20) des Kipprahmens (2) um das Kipplager (5) und die Schwenkrichtung (25) der Wippe (9) um das Schwenklager (10) in gleicher Richtung vorgesehen sind.

13. Kippeinrichtung nach Anspruch 1 bis 12, **dadurch gekennzeichnet, dass** das Schwenklager (10) der Wippe (9) auf dem Festrahmen (1) zwischen dem Kipplager (5) des Kipprahmens (2) und dem Schwenklager (14) des Hubzylinders (8) in der Wippe (9) liegt.

## Claims

1. Tilting device for a vehicle, in particular for a two-axle universal industrial vehicle for municipal purposes, wherein a fixed frame (1) of the tilting device can be exchangeably fastened to a vehicle frame and a tilting frame (2), in particular with a tilting bridge (3) and base plate (4) is placed on the fixed frame (1) and can be pivoted by means of a lifting device (8) arranged by means of a support (12) on the fixed frame (1) about a tilting bearing (5) connecting the fixed frame (1) and tilting frame (2), **characterised in that** the support (12) of the lifting device (8) is configured so as to be height adjustable on the fixed frame (1) together with the lifting device (8) relative to the fixed frame (1) **in that** a two-armed lever or a rocker (9) is pivotably mounted in a pivot bearing (10) on the fixed frame (1) and the lifting device (8) is pivotably mounted by means of a pivot bearing (14) on one of the lever arms (9b, 9a) and the other free lever arm (9a, 9b) can be pivoted downward when the tilting frame (2) is tilted up, so the entire lifting device (8) is pivoted upward.

2. Tilting device according to claim 1, **characterised in that** the lifting device (8) is a pneumatic and/or hydraulic and/or electric lifting cylinder (8) with at least one telescopable telescopic cylinder (8a, 8b, 8c).

3. Tilting device according to claim 1 or 2, **characterised in that** the lower edge of the lifting device (8) can be vertically height-adjusted upwardly up to the lower edge of the fixed frame (1), or beyond.

4. Tilting device according to claim 3, **characterised in that** the vertical spacing (27) between the lower edge of the lifting device (8) and the lower edge of the fixed frame (1) can be brought by the lifting device (8) to a value which, to load or unload the tilting device onto or from a vehicle, requires a remaining adjustment height of the tilting device by means of external plug supports which can be provided on the tilting device and removed therefrom, of only about 0-10 cm.

5. Tilting device according to any one of claims 1 to 4, **characterised in that** the lever ratio of the two lever arms (9a, 9b) of the rocker (9) is about 1:2 with respect to reduction of the weight of the structure which comprises the tilting frame (2), the tilting bridge (3) and the base plate (4).

6. Tilting device according to any one of claims 1 to 5, **characterised in that** the free lever arm (9a, 9b) can be pivoted downward during the lowering process of the tilting frame (2) onto the fixed frame (1) directly or indirectly by the structure which comprises the tilting frame (2), the tilting bridge (3) and the base plate (4) so that the entire lifting device (8) on the other lever arm (9b, 9a) is pivoted upward.

7. Tilting device according to claim 6, **characterised in that** during the lowering process of the tilting frame (2) onto the fixed frame (1), a folding support (17), which was folded into position beforehand, acts in between.

8. Tilting device according to claim 7, **characterised in that** the folding support (17) is arranged on the free lever arm (9a, 9b) of the rocker (9) or on the lower side of the tilting frame (2).

9. Tilting device according to claim 7 or 8, **characterised in that** the folding support (17) is actuated by driving manually or by motor, in particular by means of a cable pull.

10. fitting device according to any one of claims 1 to 5, **characterised in that** the free lever arm (9b, 9a) can be pivoted downward by means of a pneumatic and/or hydraulic and/or electric lowering mechanism, so the lifting cylinder (8) is pivoted upward.

11. Tilting device according to claim 1 to 10, **characterised in that** the orientation of the longitudinal axis of the rocker (9) or its pivot bearing (10) is parallel in the direction (13) of travel of the vehicle or else transverse thereto.

12. Tilting device according to claim 1 to 11, **characterised in that** the tilting direction (20) of the tilting frame (2) about the tilting bearing (5) and the pivoting direction (25) of the rocker (9) about the pivot bearing (10) are provided in the same direction.

13. Tilting device according to claim 1 to 12, **characterised in that** the pivot bearing (10) of the rocker (9) on the fixed frame (1) is located between the tilting bearing (5) of the tilting frame (2) and the pivot bearing (14) of the lifting cylinder (8) in the rocker (9).

## Revendications

1. Structure basculante pour un véhicule, en particulier pour un véhicule utilitaire universel à deux essieux à usage communal, étant précisé qu'un châssis fixe (1) de ladite structure basculante est fixé à un châssis de véhicule de manière à pouvoir être changé, et qu'on pose sur le châssis fixe (1) un châssis basculant (2), en particulier pourvu d'une benne basculante (3) et d'une plaque de base (4), qui est apte à pivoter, à l'aide d'un dispositif de levage (8) disposé grâce à un support (12) sur le châssis fixe (1), sur un palier de pivotement (5) qui relie le châssis fixe (1) et le châssis basculant (2),
**caractérisée en ce que** le support (12) du dispositif de levage (8) prévu sur le châssis fixe (1) est réglable en hauteur avec ledit dispositif de levage (8), par rapport au châssis fixe (1), grâce au fait qu'un levier à deux bras ou une bascule (9) est monté pivotant dans un palier de pivotement (10) sur le châssis fixe (1), et le dispositif de levage (8) est monté pivotant par l'intermédiaire d'un palier de pivotement (14) sur l'un des bras de levier (9b, 9a) tandis que l'autre bras de levier libre (9a, 9b), quand le châssis basculant (2) est relevé, est apte à pivoter vers le bas, de sorte que tout le dispositif de levage (8) pivote vers le haut.

2. Structure basculante selon la revendication 1, **caractérisée en ce que** le dispositif de levage (8) est constitué par un vérin pneumatique et/ou hydraulique et/ou électrique (8) avec au moins un cylindre télescopique (8a, 8b, 8c).

3. Structure basculante selon la revendication 1 ou 2, **caractérisée en ce que** le bord inférieur du dispositif de levage (8) est réglable à la verticale vers le haut jusqu'au bord inférieur du châssis fixe (1) ou au-delà.

4. Structure basculante selon la revendication 3, **caractérisée en ce que** la distance verticale (27) entre le bord inférieur du dispositif de levage (8) et le bord inférieur du châssis fixe (1) peut être amenée grâce au dispositif de levage (8) à une valeur qui nécessite une hauteur de réglage résiduelle de la structure basculante d'environ 0-10 cm seulement pour le chargement et le déchargement de ladite structure sur un véhicule ou à partir de celui-ci à l'aide de montants enfichables extérieurs aptes à être installés sur ladite structure basculante et amovibles.

5. Structure basculante selon l'une des revendications 1 à 4, **caractérisée en ce que** le rapport de levier des deux bras de levier (9a, 9b) de la bascule (9) est constitué par une démultiplication d'environ 1:2 du poids de la structure comprenant le châssis basculant (2), la benne basculante (3) et la plaque inférieure (4).

6. Structure basculante selon l'une des revendications 1 à 5, **caractérisée en ce que** le bras de levier libre (9a, 9b), pendant l'abaissement du châssis basculant (2) sur le châssis fixe (1) provoqué directement ou indirectement par la structure comprenant le châssis basculant (2), la benne basculante (3) et le plaque inférieure (4), est apte à pivoter vers le bas, de sorte que tout le dispositif de levage (8) pivote vers le haut sur l'autre bras de levier (9b, 9a).

7. Structure basculante selon la revendication 6, **caractérisée en ce que** pendant l'abaissement du châssis basculant (2) sur le châssis fixe (1), un montant rabattable (17) qui a été préalablement déployé en position agit entre les deux.

8. Structure basculante selon la revendication 7, **caractérisée en ce que** le montant rabattable (17) est disposé sur le bras libre (9a, 9b) de la bascule (9) ou sur le côté inférieur du châssis basculant (2).

9. Structure basculante selon la revendication 7 ou 8, **caractérisée en ce que** l'actionnement du montant rabattable (17) se fait manuellement ou à l'aide d'un moteur, en particulier par l'intermédiaire d'un câble de traction.

10. Structure basculante selon l'une des revendications 1 à 5, **caractérisée en ce que** le bras de levier libre (9b, 9a) est apte à pivoter vers le bas à l'aide d'un dispositif d'abaissement pneumatique et/ou hydraulique et/ou électrique, de sorte que le vérin (8) pivote vers le haut.

11. Structure basculante selon l'une des revendications 1 à 10, **caractérisée en ce que** l'orientation de l'axe longitudinal de la bascule (9) ou du palier de pivotement (10) de celle-ci est parallèle au sens de circulation (13) du véhicule ou transversal par rapport à celui-ci.

12. Structure basculante selon l'une des revendications 1 à 11, **caractérisée en ce que** le sens de basculement (20) du châssis basculant (2) sur le palier de basculement (5) et le sens de pivotement (25) de la bascule (9) sur le palier de pivotement (10) sont prévus dans le même sens.

13. Structure basculante selon l'une des revendications 1 à 12, **caractérisée en ce que** le palier de pivotement (10) de la bascule (9) sur le châssis fixe (1) se trouve entre le palier de basculement (5) du châssis basculant (2) et le palier de pivotement (14) du vérin (8) dans la bascule (9).
